# DEMANDE DE BREVET EUROPEEN

(11) **EP 1 489 826 A1**
(43) Date de publication de la demande: **22.12.2004**
(21) Numéro de dépôt: 04291528.0
(22) Date de dépôt: 17.06.2004
(51) Int. Cl.: H04M 17/02, G07F 7/08

(54) **Procédé d'authentification depuis un terminal par l'accès au contenu d'une carte SIM dans un téléphone mobile**

(30) Priorité: 17.06.2003 FR 0350223
(71) Demandeur: Bouygues Telecom, 92100 Boulogne Billancourt (FR)
(72) Inventeur: Plagne, Sylvain, 92100 Boulogne-Billancourt (FR)
(74) Mandataire: Breesé, Pierre

(57) **Abrégé**

La présente invention se rapporte à un procédé de télécommunications pour un utilisateur abonné d'un réseau de téléphonie mobile depuis un lecteur de carte à puce (3), ledit lecteur possédant des moyens de connexion à un réseau de communication, au moyen d'une carte SIM (1) comportant les étapes consistant à :
- Etablir une connexion entre la carte SIM (1) et le lecteur (3) ;
- Demander à l'utilisateur de saisir son code PIN (Personal Identification Number) ;
caractérisé en ce qu'il comprend en outre, en cas de succès d'authentification du code PIN les étapes suivantes :
- Lecture du contenu de la carte SIM par le lecteur ;
- Connexion du lecteur au réseau mobile;
- Authentification de l'abonné par le réseau mobile ;
- Envoi du réseau mobile au lecteur d'informations concernant le crédit disponible pour l'abonné et la nature des services auxquels son abonnement lui permet d'accéder ;
- Accès par l'utilisateur aux services fournis par le lecteur;
- ledit procédé étant en outre caractérisé en ce que l'établissement de la connexion entre la carte SIM et le lecteur est réalisé au moyen d'une connexion de type câble, infrarouge, onde radio de courte portée de type notamment RFID ou Bluetooth, ou bien de type 802.11 (Wi-Fi), la carte SIM étant intégrée à un appareil (2) de type téléphone mobile ou assistant personnel numérique.

## Description

La présente invention se rapporte au domaine des télécommunications.
La présente invention se rapporte plus particulièrement à un procédé permettant à un abonné d'un réseau de téléphonie mobile d'utiliser au moyen de sa carte SIM des services supplémentaires qui sortiraient du cadre classique de la téléphonie mobile et qui sont mis en oeuvre au sein de dispositifs comportant un lecteur de cartes à puce et non dédiés spécifiquement à la téléphonie.

L'invention s'applique à l'ensemble des lecteurs de cartes à puce tels les lecteurs de cartes bancaires ou de cartes « Vitale ». Dans la présente invention, l'établissement de la connexion entre la carte SIM et le lecteur est réalisé au moyen d'une connexion de type câble, infrarouge, onde radio de courte portée de type notamment RFID ou Bluetooth, ou bien de type 802.11 (Wi-Fi), la carte SIM étant intégrée à un appareil de type téléphone mobile ou assistant personnel numérique.

L'art antérieur connaît déjà, par la demande de brevet européen EP 1 085 651 (British Télécommunications), un système de radiocommunication cellulaire mobile. L'invention présentée dans cette demande de brevet concerne une interface placée entre un système de téléphone par satellite et un système de téléphone cellulaire, qui permet que des appels à un téléphone cellulaire d'un abonné soient déviés sur un combiné téléphonique par satellite lorsque l'utilisateur ne peut pas utiliser son téléphone cellulaire, par exemple à bord d'un avion équipé d'un système de téléphone par satellite. L'utilisateur introduit une carte (la carte SIM de son téléphone mobile ou une carte compatible avec l'équipement téléphonique par satellite existant) dans un lecteur approprié dans le téléphone par satellite, ce qui entraîne le système de vérification de cartes de la station au sol du satellite d'établir une connexion avec un réseau cellulaire hôte. Ce dernier comporte une unité d'interface qui imite le fonctionnement d'une station de base normale, de façon que le système cellulaire hôte se comporte comme si le terminal utilisateur mobile était en itinérance sur le réseau hôte, mais était « occupé ». L'interface réinitialise également les instructions de déviation des appels existants, de façon que lorsque le système cellulaire hôte reçoit une tonalité de ligne occupée de l'unité d'imitation de la station de base, il achemine les appels au numéro de répertoire du terminal. Afin de permettre au réseau hôte d'extraire l'identité du combiné de l'utilisateur (IMSI), il utilise un procédé selon lequel des données relatives à un utilisateur ayant un code d'identification d'un premier type (le numéro de répertoire) peuvent être utilisées pour accéder à un registre dans lequel des codes d'identification du premier type sont associés à des codes d'identification du second type (l'IMSI), le procédé consistant ensuite à recevoir du registre, en réponse au signal, un code du second type, de façon que les informations de mise à jour d'emplacement puissent ensuite être transmises à un système associé de commutation en fonction du code d'identification du second type.
L'art antérieur connaît également, par la demande de brevet britannique GB 2 345 825 (Samsung), un système pour permettre à un abonné d'utiliser une carte SIM dans un lieu de service CDMA. Un terminal CDMA comporte une interface pour connecter une carte SIM à un contrôleur de terminal. Le terminal lit les informations concernant l'abonné à partir de la carte et envoie ces informations au sous-système CDMA. Le sous-système affecte un numéro de gestion unique au terminal et envoie la vérification au terminal quand les informations concernant l'abonné ont été vérifiées par le sous-système de réseau utilisant la carte SIM. Un réseau public connecte le sous-système CDMA et le sous-système utilisant la carte SIM qui fait partie d'un réseau GSM, ce qui permet à un abonné GSM d'utiliser une carte SIM dans un lieu couvert par un réseau CDMA. Les coûts des appels peuvent être calculés au niveau du sous-système CDMA et envoyés au sous-système utilisant la carte SIM. Un réseau fixe ou le réseau associé à la carte SIM peuvent être notifiés que leur demande d'appel est un « appel international » lorsque qu'ils essaient de contacter une carte SIM dans un réseau CDMA. De plus, un utilisateur d'un terminal CDMA peut enregistrer un numéro de téléphone dans la carte SIM ou une mémoire du terminal.

L'art antérieur connaît également par la demande de brevet européen EP 1 202 546 (British Telecom), un terminal de communication capable de recevoir une carte SIM. Cette demande de brevet européen est limitée à l'utilisation d'une carte de type SIM dans un téléphone public. Le but de l'invention de l'opérateur britannique British Telecom est de débiter un appel réalisé depuis une cabine publique sur un compte de téléphonie mobile. Ce document ne divulgue pas certaines caractéristiques essentielles du procédé technique de la présente invention, en particulier le fait que l'établissement de la connexion entre la carte SIM et le lecteur LCP est réalisé au moyen d'une connexion de type câble, infrarouge, onde radio de courte portée de type notamment RFID ou Bluetooth, ou bien de type 802.11 (Wi-Fi), la carte SIM étant intégrée à un appareil de type téléphone mobile ou assistant personnel numérique.

On connaît également dans l'état de la technique la demande PCT WO 01/86881 (Accenture) qui propose un procédé et un système pour une interface de produit mobile universelle sans fil. Généralement, les produits/objets ont leur propre interface, ou alors une interface homme/machine (MMI). Techniquement l'interface de produit mobile universel sans fil faisant l'objet de cette invention (WUMPI) innove dans ce domaine en remplaçant l'interface MMI du produit par la mise en oeuvre d'une commande logicielle inversée via des techniques de transmission sans fil Bluetooth et/ou de canal de transmission sans fil, pour contrôler l'écran du dispositif mobile, en remplaçant le composant logiciel local installé dans le dispositif mobile qui commande ce qui est présenté à l'écran en terme d'interface homme-machine MMI. Ceci permet à un produit/objet se trouvant dans la zone du dispositif mobile de prendre le contrôle via le canal de transmission sans fil ou toute autre fonction sans fil similaire du dispositif mobile et d'étendre l'interface du produit au dispositif mobile qui entre sous son contrôle, ou le réseau de zone personnel du produit/objet (PAN). Cette demande de brevet PCT se rapporte essentiellement au commerce électronique mobile et ne met pas en oeuvre de carte à puce.

On connaît également dans l'art antérieur une demande de brevet allemand DE 44 19 651 de DETECON (Deutsche Telepost Consulting) qui propose un procédé de facturation des communications, notamment en relation avec le MSC de l'opérateur. Ce document publié en 1995 appartient à l'arrière-plan technologique de l'invention.

Enfin, on connaît aussi la demande de brevet PCT WO 94/11849 du finlandais Harri, Tapani Vatanen, publiée en 1994. Ce document se rapporte à un système et un procédé servant à utiliser des stations mobiles fonctionnant avec une carte, particulièrement, la carte de service de la carte SIM (SIM = Subscriber Identity Module = module d'identité d'abonné) du réseau GSM contenant l'unité SIM, dans différents systèmes de service électronique nécessitant une protection élevée des données. Cette demande concerne principalement le domaine des transactions financières pour les télécommunications mobiles.

Les procédés et systèmes connus de l'art antérieur ne permettent pas d'atteindre le but de la présente invention, qui est d'offrir aux abonnés d'un réseau de téléphonie mobile la possibilité d'accéder au moyen de leur carte SIM à des services liés à des lecteurs de carte à puce non dédiés à la téléphonie comme les distributeurs de billets, les bornes « Carte Vitale » ou les lecteurs de carte de paiement des commerçants.

La présente invention entend remédier aux inconvénients de l'art antérieur en proposant un procédé innovant destiné à permettre l'utilisation de cartes SIM dans un lecteur de cartes à puces qui n'est pas intégré dans un téléphone cellulaire ou de permettre à une carte SIM intégrée dans un téléphone cellulaire de se connecter à un lecteur de cartes à puce par une liaison de type câble, infrarouge, RFID ou Bluetooth.

A cet effet, l'invention concerne, dans son acception la plus large, un procédé de télécommunications pour un utilisateur abonné d'un réseau de téléphonie mobile RTM depuis un lecteur de carte à puce LCP, ledit lecteur possédant des moyens de connexion à un réseau de communication, au moyen d'une carte SIM comportant les étapes consistant à :
- Etablir une connexion entre la carte SIM et le lecteur ;
- Demander à l'utilisateur de saisir son code PIN (Personal Identification Number) ;
caractérisé en ce qu'il comprend en outre, en cas de succès d'authentification du code PIN les étapes suivantes :
- Lecture du contenu de la carte SIM par le lecteur ;
- Connexion du lecteur LCP au réseau mobile RTM ;
- Authentification de l'abonné par le réseau mobile RTM ;
- Envoi du réseau mobile RTM au lecteur LCP d'informations concernant le crédit disponible pour l'abonné et la nature des services auxquels son abonnement lui permet d'accéder ;
- Accès par l'utilisateur aux services fournis par le lecteur LCP ;
- ledit procédé étant en outre caractérisé en ce que l'établissement de la connexion entre la carte SIM et le lecteur LCP est réalisé au moyen d'une connexion de type câble, infrarouge, onde radio de courte portée de type notamment RFID ou Bluetooth, ou bien de type 802.11 (Wi-Fi), la carte SIM étant intégrée à un appareil de type téléphone mobile ou assistant personnel numérique.
   On comprendra mieux l'invention à l'aide de la description, faite ci-après à titre purement explicatif, d'un mode de réalisation de l'invention, en référence à la figure annexée :

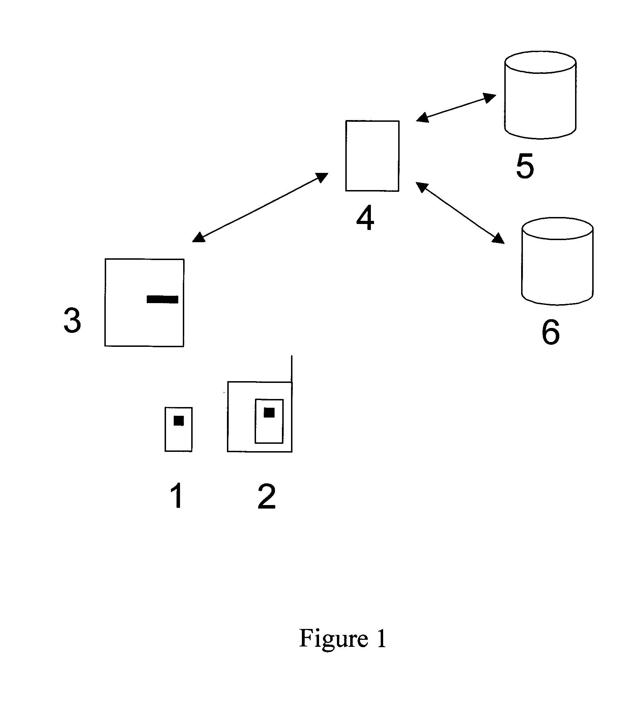

- la figure 1 représente une mise en oeuvre du procédé selon l'invention.

L'élément (1) représente la carte SIM. L'élément (2) représente la carte SIM, insérée dans un terminal mobile capable de communiquer avec le LCP (élément 3).
Le LCP est interconnecté avec le RTM au travers d'une plate-forme d'échange sécurisé (élément 4), qui est elle-même connectée aux bases de données d'abonnées du RTM (élément 5), et au système de facturation de l'opérateur du RTM (élément 6).

La carte (2) et le lecteur (3) peuvent communiquer à l'aide d'un câble, d'une interface infrarouge, ou d'une interface radio de type Bluetooth ou Wifi.

Lorsque le lecteur (3) peut entrer en communication avec la carte SIM, le code PIN est demandé à l'utilisateur. Le lecteur (3) dispose ainsi de l'identité d'abonné du porteur de la carte SIM (IMSI). Cette identité est transmise à la plate-forme d'échange sécurisé (4) au travers d'une solution d'échange d'information sécurisée (liaison dédiée, liaison par tunnel sécurisé sur réseau public type Internet etc.). La plate-forme d'échange sécurisé (4) transmet la requête au lecteur (5), en réalisant le cas échéant des vérifications de sécurité (authentification du lecteur (3), typiquement). Sur réception de l'identité de l'abonné, le réseau (5) vérifie que l'abonné est autorisé à utiliser le service de télécommunications. Dans l'affirmative, le réseau (5) va authentifier la carte SIM (1) ou (2), en s'appuyant sur les mécanismes d'authentification normalisés du RTM (authentification GSM, GPRS ou UMTS). Typiquement, cette authentification peut s'organiser comme suit : le réseau (5) transmet un challenge (nombre aléatoire dénommé "RAND" dans la terminologie GSM 03.020) à la carte SIM, au moyen du lecteur (3). Sur réception de ce challenge, la carte SIM calcule une réponse ("SRES", selon la terminologie précitée), et la transmet au réseau (5) par l'intermédiaire du lecteur (3) puis de la plate-forme d'échange sécurisé (4). Le réseau (5) vérifie la validité de cette réponse, et en cas d'authentification réussie, transmet au lecteur (3) l'autorisation d'utiliser le service de télécommunication demandé (il peut s'agir d'un service d'acheminement d'appel voix ou data : communication Internet, fax, SMS, etc.).

Selon un mode particulier de réalisation, le réseau (5) peut également transmettre un crédit de communication associé.

A la terminaison de la communication, le lecteur (3) recontacte la plate-forme d'échange sécurisé (4) pour transmettre des informations d'usage (typiquement, la durée de la communication, la nature de la communication, la quantité d'information de données véhiculées etc.). Ces informations sont transmises au système de facturation (6), en vue de facturer le client pour son utilisation.

Selon un mode particulier de réalisation, le lecteur (3) peut régulièrement interroger la plate-forme d'échange sécurisé (4), de manière à mettre à jour le crédit disponible pour l'utilisateur, en cours d'utilisation du service.

Selon une variante, le lecteur de carte à puce est un lecteur de carte de paiement de type « commerce ». Dans cette variante, les services de télécommunications qui peuvent typiquement être proposés à l'utilisateur après l'avoir authentifié, peuvent être l'accès à des sites d'information ou de contenus personnalisés.
Selon une autre variante, le lecteur de carte à puce est un lecteur de carte associé à des prestations liées à la Santé (lecteur de type « Carte Vitale ») ou à la Culture (typiquement, des bornes interactives dans des musées ou des lieux ouverts au public).

Selon un mode de mise en oeuvre particulier, le lecteur de carte à puce est un distributeur de billets de banque. L'utilisateur authentifié selon le procédé décrit peut ainsi accéder à des services de télécommunication à l'aide de l'écran de ce distributeur.
Selon un autre mode de mise en oeuvre particulier, le lecteur de carte à puce est un horodateur.
Enfin, selon une dernière variante, le lecteur de carte à puce est le lecteur d'une cabine téléphonique publique ou d'un publiphone.

La présente invention se rapporte également à un système pour la mise en oeuvre du procédé comprenant au moins une carte SIM, un lecteur de carte à puce, ledit lecteur possédant des moyens de connexion à un réseau de communication.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de télécommunications pour un utilisateur abonné d'un réseau de téléphonie mobile RTM depuis un lecteur de carte à puce LCP, ledit lecteur possédant des moyens de connexion à un réseau de communication, au moyen d'une carte SIM comportant les étapes consistant à :
• Etablir une connexion entre la carte SIM et le lecteur ;
• Demander à l'utilisateur de saisir son code PIN (Personal Identification Number) ;
**caractérisé en ce qu'**il comprend en outre, en cas de succès d'authentification du code PIN les étapes suivantes :
• Lecture du contenu de la carte SIM par le lecteur ;
• Connexion du lecteur LCP au réseau mobile RTM ;
• Authentification de l'abonné par le réseau mobile RTM ;
• Envoi du réseau mobile RTM au lecteur LCP d'informations concernant le crédit disponible pour l'abonné et la nature des services auxquels son abonnement lui permet d'accéder ;
• Accès par l'utilisateur aux services fournis par le lecteur LCP ;
• ledit procédé étant en outre **caractérisé en ce que** l'établissement de la connexion entre la carte SIM et le lecteur LCP est réalisé au moyen d'une connexion de type câble, infrarouge, onde radio de courte portée de type notamment RFID ou Bluetooth, ou bien de type 802.11 (Wi-Fi), la carte SIM étant intégrée à un appareil de type téléphone mobile ou assistant personnel numérique.

2. Procédé de télécommunications selon l'une quelconque de la revendication 1, **caractérisé en ce que** le lecteur de carte à puce est un lecteur de carte de paiement de type « commerce ».

3. Procédé de télécommunications selon l'une quelconque de la revendication 1, **caractérisé en ce que** le lecteur de carte à puce est un lecteur de carte associé à des prestations liées à la santé de type lecteur de « Carte Vitale ».

4. Procédé de télécommunications selon l'une quelconque de la revendication 1, **caractérisé en ce que** le lecteur de carte à puce est un distributeur de billets de banque.

5. Procédé de télécommunications selon l'une quelconque de la revendication 1, **caractérisé en ce que** le lecteur de carte à puce est un horodateur.

6. Procédé de télécommunications selon l'une quelconque de la revendication 1, **caractérisé en ce que** le lecteur de carte à puce est le lecteur d'une cabine téléphonique publique ou d'un publiphone.

7. Système pour la mise en oeuvre du procédé selon l'une quelconque des revendications précédentes comprenant au moins une carte SIM, un lecteur de carte à puce, ledit lecteur possédant des moyens de connexion à un réseau de communication.
